# EUROPEAN PATENT SPECIFICATION

(11) **EP 4 068 205 B1**
(45) Date of publication and mention of the grant of the patent: **11.06.2025**
(21) Application number: 22165377.7
(22) Date of filing: 30.03.2022
(51) Int. Cl.: G06T 7/246

(54) **METHOD FOR TRACKING OBJECT WITHIN VIDEO FRAME SEQUENCE AND APPARATUS THEREFOR**
VERFAHREN ZUR VERFOLGUNG EINES OBJEKTS IN EINER VIDEOBILDSEQUENZ UND GERÄT DAFÜR
PROCÉDÉ DE SUIVI D'OBJET DANS UNE SÉQUENCE DE TRAME VIDÉO ET APPAREIL CORRESPONDANT

(30) Priority: 02.04.2021 CN 202110360415
(43) Date of publication of application: 05.10.2022
(73) Proprietor: Nio Technology (Anhui) Co., Ltd, Hefei City, Anhui 230601 (CN)
(72) Inventor: LIN, Hao, Hefei City, Anhui (CN); QI, Chengzuo, Hefei City, Anhui (CN); WANG, Shiting, Hefei City, Anhui (CN)
(74) Representative: Vossius & Partner Patentanwälte Rechtsanwälte mbB

(56) References cited:
- WO-A1-2006/085248
- JP-A- 2008 174 000
- JP-A- 2018 103 751
- DUAN GENQUAN ET AL: "Group Tracking: Exploring Mutual Relations for Multiple Object Tracking", 7 October 2012, ARXIV.ORG, PAGE(S) 129 - 143, XP047530700

## Description

### Technical Field

The invention relates to automobile intelligent driving technologies, and in particular, to a method for tracking an object within a video frame sequence, and an image processing apparatus for implementing the foregoing method

### Background Art

As the development of autonomous driving technology accelerates, the era of intelligent vehicles is coming. At present, the industry has invested a lot of effort in the field of driver assistance and autonomous driving. Meanwhile, the expansion of city size is putting a strain on roads and parking spots. Therefore, limiting the area occupied by parking spots could be a feasible method to alleviate this problem. However, this will make parking more difficult.

In driver assistance or autonomous driving of an automobile, a traveling path needs to be dynamically adjusted by continuously tracking a target or an object (such as a parking spot, a column, a parking stopper, etc.), so as to ensure that the vehicle drives into or out of the parking spot. However, tracking of a target, especially tracking of multiple targets, requires a complex algorithm and consumes a large quantity of computing resources. In addition, in a continuous tracking process, if an error of a target position accumulates with the continuation of video frames, it may lead to erroneous adjustment or planning of a traveling path.

JP 2018 103751 A relates to a parking assistance device where a positional relationship between a marker position and a target parking position is stored in a storage unit. The target parking position is calculated based on the positions of the markers recognized by the recognition unit and the positional relationship.

The article by Duan Genquan et al: "Group Tracking: Exploring Mutual Relations for Multiple Object Tracking", pages 129 - 143 proposes to track multiple previously unseen objects in unconstrained scenes. Instead of considering objects individually, objects in mutual context are modeled with each other to benefit robust and accurate tracking.

It can be learned from the above that it is required to provide a method for continuously tracking an object, an automatic parking method, and a device for implementing the foregoing methods, so as to solve the above problems.

### Summary of the Invention

The subject-matter of the present invention is achieved by the features of the independent claims. Further preferred embodiments of the present invention are defined in the dependent claims.

An objective of the invention is to provide a method for tracking an object within a video frame sequence, an automatic parking method, an image processing apparatus for implementing the foregoing methods, a vehicle controller, and a computer-readable storage medium, which can eliminate a tracking error and reduce consumption of computing resources.

A method for tracking an object within a video frame sequence according to an aspect of the invention is provided, the video frame sequence including at least one first video frame and at least one second video frame that are captured by an onboard image obtaining apparatus, where the second video frame is later than the first video frame in terms of time, and the method includes:
determining a relative position relationship between a first object and a second object based on the first video frame, where the relative position relationship remains unchanged within the video frame sequence; and
updating a position of the second object based on the relative position relationship and a position of the first object that is determined based on the second video frame.

Preferably, in the foregoing method, the first object is a parking spot, and the second object is at least one of the following: a column, a parking stopper, a parking lock, and a parking spot number printed on the ground.

The position of the first object and the position of the second object are respectively represented by a position of at least one feature point of the first object and a position of at least one feature point of the second object in a plane parallel to the ground, and the relative position relationship is represented by a vector connecting the at least one feature point of the first object and the at least one feature point of the second object.

Preferably, in the foregoing method, the step of determining a relative position relationship includes:
identifying the first object and the second object within the first video frame;
projecting the identified first object and second object into a planar coordinate system parallel to the ground; and
determining coordinates of the feature point of the first object and the feature point of the second object within the projection plane to obtain the vector connecting the feature point of the first object and the feature point of the second object.

The first video frame includes a plurality of video frames, and the coordinates of the feature point of the first object and the feature point of the second object in the projection plane are a mean of coordinates of the plurality of video frames.

Preferably, in the foregoing method, the step of updating a position of the second object includes:
identifying the first object within the second video frame;
updating coordinates of the first object; and
updating coordinates of the second object based on the vector and the updated coordinates of the first object.

An image processing apparatus for tracking an object within a video frame sequence in automatic parking scenario according to another aspect of the invention is provided, including:
a memory;
a processor; and
a computer program stored on the memory and executable on the processor, where the computer program is executed to cause the following steps to be performed:
   determining a relative position relationship between a first object and a second object based on the first video frame, where the relative position relationship remains unchanged within the video frame sequence; and
   updating a position of the second object based on the relative position relationship and a position of the first object that is determined based on the second video frame.

Disclosed is also an automatic parking method according to another aspect, including the following steps:
determining a relative position relationship between a parking spot and at least one reference object near the parking spot based on a first video frame in a video frame sequence, where the relative position relationship remains unchanged within the video frame sequence;
updating a position of the reference object based on the relative position relationship and a position of the parking spot that is determined based on a second video frame in the video frame sequence; and
planning or adjusting a traveling path based on the position of the parking spot that is determined based on the second video frame in the video frame sequence and the updated position of the reference object.

Preferably, in the foregoing method, the video sequence frame is captured by an onboard image obtaining apparatus.

A vehicle control system according to another aspect, including:
a memory;
a processor;
a computer program stored on the memory and executable on the processor, where the computer program is executed to cause the following steps to be performed:
   determining a relative position relationship between a parking spot and at least one reference object near the parking spot based on a first video frame in a video frame sequence, where the relative position relationship remains unchanged within the video frame sequence;
   updating a position of the reference object based on the relative position relationship and a position of the parking spot that is determined based on a second video frame in the video frame sequence; and
   dynamically planning or adjusting a traveling path based on the position of the parking spot that is determined based on the second video frame in the video frame sequence and the updated position of the reference object.

A computer-readable storage medium having a computer program stored thereon according to another aspect, where when the program is executed by a processor, the method described above is implemented.

In one or more embodiments of the invention, a relative position relationship between tracked objects is used to dynamically update positions of the objects, and therefore, there is no need to identify and locate all the objects in subsequent video frames, which reduces algorithm complexity and consumption of computing resources. In addition, since the relative position relationship remains unchanged, and a position identification error is related to only a position identification error of some objects, this is advantageous to the reduction of accumulation of the error.

### Brief Description of the Drawings

The above-mentioned and/or other aspects and advantages of the invention will become clearer and more comprehensible from the following description of various aspects in conjunction with the accompanying drawings, in which the same or similar units are denoted by the same reference numerals. In the drawings:
FIG. 1 shows an example of a top view of a region of a parking spot;
FIG. 2 is a schematic block diagram of an image processing apparatus for tracking an object within a video frame sequence according to an embodiment of the invention;
FIG. 3 is a flowchart of a method for tracking an object within a video frame sequence according to another embodiment of the invention;
FIG. 4 is a plan view of a region of a first object (represented by a rectangle ABCD);
FIGS. 5A and 5B schematically show a top view generated based on a first video frame and a top view generated based on a second video frame, respectively;
FIG. 6 is a schematic block diagram of a vehicle control system according to an embodiment of the invention; and
FIG. 7 is a flowchart of an automatic parking method according to another embodiment of the invention.

### Detailed Description of Embodiments

The invention is described below more comprehensively with reference to the accompanying drawings in which schematic embodiments of the invention are shown.

In this specification, the terms such as "include" and "comprise" indicate that in addition to the units and steps that are directly and explicitly described in the specification and claims, other units and steps that are not directly or explicitly described are not excluded in the technical solutions of the invention.

Unless otherwise specified, the terms such as "first" and "second" are not used to indicate sequences of units in terms of time, space, size, etc., and are only used to distinguish between the units.

According to an aspect of the invention, a relative position relationship between objects or targets that are tracked is used to dynamically update positions of the objects. Specifically, it is assumed that the relative position relationship between the objects remains substantially unchanged within a video frame sequence or a video stream. When two or more objects are continuously tracked within the video frame sequence, a relative position relationship between these objects may be first determined based on the first one or more video frames, then positions of only some objects (hereinafter referred to as first objects) are determined based on subsequent video frames, while positions of other objects (hereinafter also referred to as second objects) may be updated based on the established relative position relationship. There is no need to identify and locate all the objects in the subsequent video frames, which reduces algorithm complexity and consumption of computing resources. In addition, since the relative position relationship for updating the positions of the objects remains unchanged, and a position identification error is related to only a position identification error of the first object, this is advantageous to the reduction of accumulation of the error.

An object is generally an entity that occupies a certain physical space, such as a parking spot, a column near the parking spot, a parking stopper in or near the parking spot, a parking lock, and a parking spot number printed on the ground. A position of an object is represented by a position of one or more feature points of the object. In addition, in an automatic parking scenario, a position of a feature point is represented by coordinates in a planar coordinate system. The planar coordinate system is located in a plane parallel to the ground. Correspondingly, the relative position relationship between the first object and the second object is represented by a directed line segment or a vector connecting their respective feature points.

According to another aspect of the invention, an onboard image obtaining apparatus (such as an onboard camera lens or camera) may be used to capture the video frame sequence. Optionally, a plurality of camera lenses or cameras may be provided on a vehicle to cover a larger field of view. As the vehicle moves, a viewing angle of the onboard image obtaining apparatus relative to an object may change, and a position of the object in a video frame may change accordingly. However, in view of the fact that the relative position relationship between the objects remains unchanged, after updated positions of some of the objects are determined based on video frames, updated positions of other objects can be calculated. Exemplarily, an object in a video frame or an image captured by the camera lens or the camera at any moment can be projected into a specific plane (for example, a plane parallel to the ground) through parameter calibration, to generate a top view of a region of the parking spot. In this case, the object is usually represented by using a straight line, a curve, or a closed figure (such as a rectangle, a triangle, etc.) in the top view. Correspondingly, a feature point of the object is on the straight line or the curve, or on or within the perimeter of the closed figure.

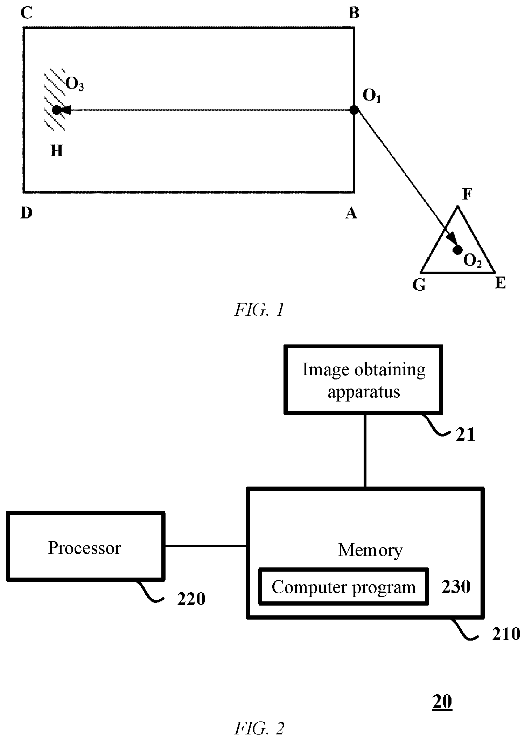

FIG. 1 shows an example of a top view of a region of a parking spot. Referring to FIG. 1, a parking spot is represented by a rectangle ABCD, a column is represented by a triangle EFG, and a parking stopper is represented by a striped region H. Exemplarily, in FIG. 1, the parking spot is used as a first object, and the parking stopper and the column are used as second objects. A midpoint O₁ of a side AB of the rectangle ABCD is used as a feature point of the parking spot, a centroid O₂ of the triangle EFG is used as a feature point of the column, and a centroid O₃ of the striped region H is used as a feature point of the parking stopper. Correspondingly, a vector *̅O̅*̅₁̅*̅O̅*̅₂̅ may be used to represent a position relationship between the parking spot and the column, and a vector *̅O̅*̅₁̅*̅O̅*̅₃̅ may be used to represent a position relationship between the parking spot and the parking stopper.

According to another aspect of the invention, objects in a plurality of video frames or images captured by a camera lens or a camera during a period of time are projected into a specific plane to generate a top view of the region of the parking spot. In this case, an object (or a feature point of the object) has a plurality of timevarying positions in the top view. In order to reduce an error in determining the relative relationship, a mean (arithmetic mean or weighted mean) of a plurality of positions of each object (or a feature point of the object) in the top view is used to represent a position of the object, and a directed line segment or a vector between the positions of the object that is determined in this manner is used to represent the relative position relationship between the objects.

FIG. 2 is a schematic block diagram of an image processing apparatus for tracking an object within a video frame sequence according to an embodiment of the invention.

The image processing apparatus 20 shown in FIG. 2 includes a memory 210, a processor 220 (for example, a graphics processing unit), and a computer program 230 stored in the memory 210 and executable on the processor 220.

Exemplarily, a video frame sequence captured by an image obtaining apparatus 21 is stored in the memory 210. The processor 220 executes the computer program 230 to track an object within the video frame sequence and output a tracking result to a vehicle control system. A manner of tracking an object is described further below.

The vehicle control system may include a plurality of controllers that communicate via a gateway. The controllers include, for example, but are not limited to, a vehicle domain controller, an autonomous driving domain controller, and an intelligent cockpit domain controller. The image processing apparatus 20 in this embodiment may be integrated into the vehicle control system, for example, integrated into the autonomous driving domain controller. In another aspect, the image processing apparatus 20 in this embodiment may alternatively be a unit independent of the vehicle control system. Optionally, the image processing apparatus 20 may be integrated with the image obtaining apparatus 21.

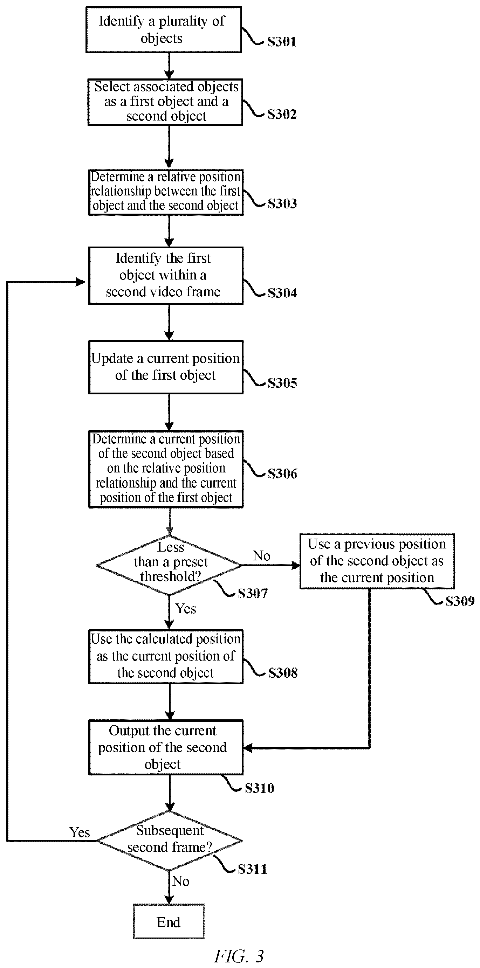

FIG. 3 is a flowchart of a method for tracking an object within a video frame sequence according to another embodiment of the invention. Exemplarily, the method described below is implemented by means of the image processing apparatus shown in FIG. 2. For example, the processor 220 may execute the computer program in the memory 210 to perform steps to be described below.

As shown in FIG. 3, in step S301, an image recognition algorithm is used to identify a plurality of objects (such as a parking spot, a column, a parking stopper, a parking lock, a parking spot number printed on the ground, a lighting apparatus, and a person) within one or more consecutive video frames. Exemplarily, a plurality of regions may be extracted within a video frame through image segmentation, and types of objects corresponding to these regions may be identified.

The method then proceeds to step S302 in which an object that is associated with the identified parking spot and that is suitable for planning and guiding an automatic parking path is selected. For example, one or more identified parking spots may be selected as a first object, and one or more of the identified column, parking stopper, parking lock, and parking spot number printed on the ground that are near the parking spot (for example, in a region several times larger than an area of the parking spot) are selected as a second object or reference object.

Then, the method proceeds to step S303 in which positions of the associated objects (the first object and the second object) are determined, and then a relative position relationship between them (between the first object and the second object) is determined. A manner of determining a relative position relationship has been described above. In this embodiment, exemplarily, each object is projected into a specific planar coordinate system (such as a planar rectangular coordinate system parallel to the ground) to generate a top view of the region of the parking spot similar to that shown in FIG. 1, a position of the object is represented by coordinates of its feature point in the planar coordinate system, and a relative position relationship is represented by a directed line segment or vector connecting the respective feature points of objects.

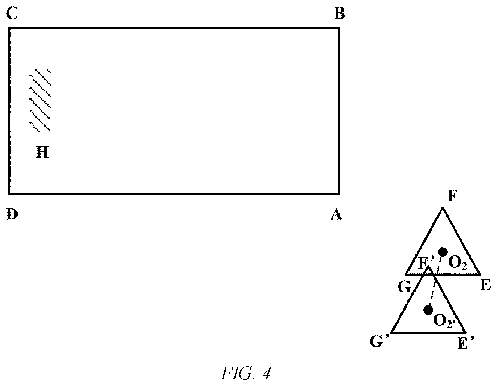

In step S303, optionally, the position of the second object may be determined based on a plurality of video frames. FIG. 4 is a plan view of a region of a first object (represented by a rectangle ABCD). A manner of determining the position of the second object based on the plurality of video frames is described below by using FIG. 4. Referring to FIG. 4, the solid-line triangle EFG and the dashed-line triangle E'F'G' respectively represent column boundaries corresponding to two different video frame moments. Exemplarily, a centroid of the triangle is taken as a feature point of the column, and it is assumed that coordinates of positions O₂ and O₂' of the feature point of the column at the two video frame moments are (X1, Y1) and (X2, Y2), respectively. To reduce an error, an average position of the positions O₂ and O₂' may be used as the position of the second object, that is, coordinates of the second object may be ((X1 + X2/2), (Y1 + Y2)/2).

To distinguish a video frame used for determining the relative position relationship in steps S301 to S303 from a subsequent video frame used for determining an updated position of an object in the following steps, the former is referred to as a first video frame and the latter is referred to as a second video frame.

After step S303 is performed, the method procedure shown in FIG. 3 proceeds to step S304. In this step, an image recognition algorithm is used to identify, within the second video frame, the parking spot that is used as the first object. The method then proceeds to step S305 in which the position of the parking spot is updated. Exemplarily, in this embodiment, the parking spot in the second video frame is projected into a specific planar coordinate system (for example, a planar rectangular coordinate system parallel to the ground) to generate a top view of the region of the parking spot. The position of the parking spot may be represented by coordinates of its feature point (such as a point on a boundary line of the parking spot) in the planar coordinate system.

After step S305 is performed, the method procedure shown in FIG. 3 proceeds to step S306. In this step, the position of the second object selected in step S302 is calculated based on the relative position relationship represented by the vector and the updated position of the parking spot.

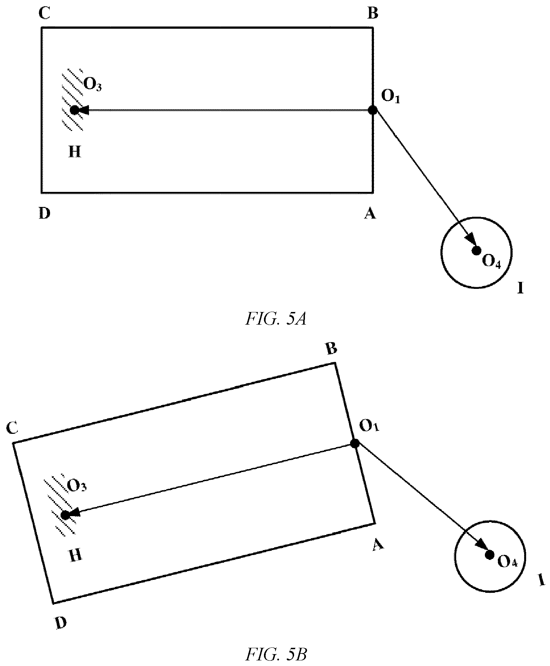

As the vehicle moves, a distance and an angle of orientation of the image obtaining apparatus relative to the parking spot may change, and therefore the top views generated based on the first video frame and the second video frame may be different. FIGS. 5A and 5B schematically show a top view generated based on a first video frame and a top view generated based on a second video frame, respectively. Referring to FIGS. 5A and 5B, assuming that a position of the vehicle is taken as the origin of the coordinate system, the coordinate systems in the two top views are translated and rotated due to changes in the distance and the angle of orientation. However, as described above, the relative position relationship between the first object and the second object remains unchanged within the video frame sequence, and therefore a vector *̅O̅*̅₁̅*̅O̅*̅₄̅ representing a position relationship between the parking spot (represented by the rectangle ABCD) and the column (represented by a circle I) and a vector *̅O̅*̅₁̅*̅O̅*̅₄̅ representing the position relationship between the parking spot and the parking stopper (represented by the striped region H) remain unchanged in FIGS. 5A and 5B (for example, lengths of the vectors *̅O̅*̅₁̅*̅O̅*̅₃̅ and *̅O̅*̅₁̅*̅O̅*̅₄̅, and an included angle between each of the vectors and the side AB of the rectangle ABCD). In this way, coordinates of the column and the parking stopper can be calculated in FIG. 5B.

The method then proceeds to step S307 in which it is determined whether a difference between the position of the second object that is calculated in step S306 and the position of the second object that is determined in step S303 is less than a preset threshold (when the position of the second object in the first second video frame is determined in step S306), or it is determined whether a difference between the current position of the second object that is calculated in step S306 and the position of the second object that is previously determined in step S306 is less than a preset threshold (when the position of the second object in a subsequent second video frame is determined in step S306).

In step S307, if the difference between the positions is less than the preset threshold, the method proceeds to step S308, and if the difference between the positions is not less than the preset threshold, the method proceeds to step S309.

In step S308, the current position of the second object is updated with the position of the second object that is calculated in step S306. The method then proceeds to step S310 in which the current position of the second object is output to the vehicle control system.

After step S310 is performed, the method procedure shown in FIG. 3 proceeds to step S311. In this step, it is determined whether there is a subsequent second video frame, and if there is a subsequent second video frame, the method returns to step S304 to determine the position of the second object at a moment corresponding to a next second video frame, and if there is no subsequent second video frame, the method procedure ends.

Another branch step of step S307 is S309. In this step, the position of the second object that is previously determined in step S306 is used as the current position of the second object. The method then proceeds to step S310 to output the current position of the second object to the vehicle control system.

When there are a plurality of first objects (for example, a plurality of parking spots), in this embodiment, the following changes may be made to the manner of determining the second position in step S306. First, for each first object, a relative position relationship between the first object and the second object that is represented by a vector, and updated coordinates of the first object are used to calculate coordinates of the second object, so that a plurality of reference positions of the second object can be obtained. Subsequently, the position of the second object (namely, the position of the second object mentioned in steps S307 to S309) is determined based on the plurality of obtained reference positions. Exemplarily, an average position of the plurality of reference positions may be used as the position of the second object. Alternatively, exemplarily, based on a maximum suppression algorithm, a reference position with a relatively high confidence level may be used as the position of the second object.

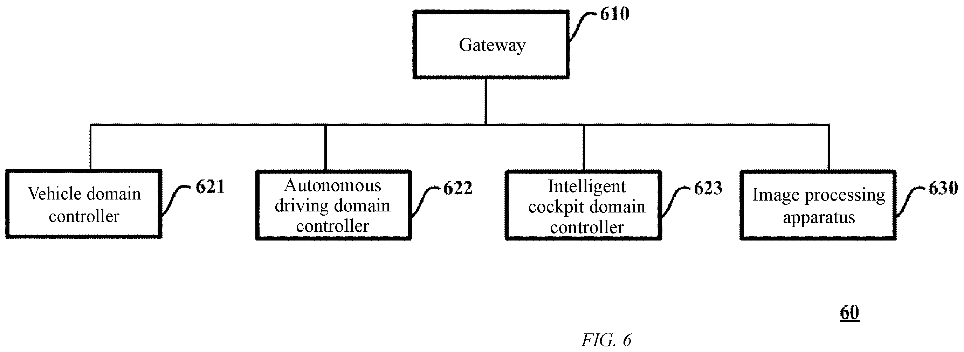

FIG. 6 is a schematic block diagram of a vehicle control system according to an embodiment of the invention.

As shown in FIG. 6, the vehicle control system 60 includes a gateway 610 (such as a CAN bus gateway) and controllers 621 to 623. Optionally, the vehicle control system 60 further includes an image processing apparatus 630 for object tracking in vehicle driving. Exemplarily, the image processing apparatus may have the structure of the apparatus shown in FIG. 2 and can be used to implement the method for tracking an object within a video frame sequence shown in FIG. 3.

Referring to FIG. 6, the controllers 621 to 623 are, for example, a vehicle domain controller, an autonomous driving domain controller, and an intelligent cockpit domain controller, which communicate with each other and with the image processing apparatus 630 via a gateway. Although in the architecture shown in FIG. 6, the image processing apparatus 630 exists as an independent unit within the vehicle control system, this is not a necessary configuration. Actually, the image processing apparatus 630 may be, for example, integrated into a controller (such as the autonomous driving domain controller), or may be a unit independent of the vehicle control system. Optionally, the image processing apparatus 630 may further integrate an image obtaining apparatus.

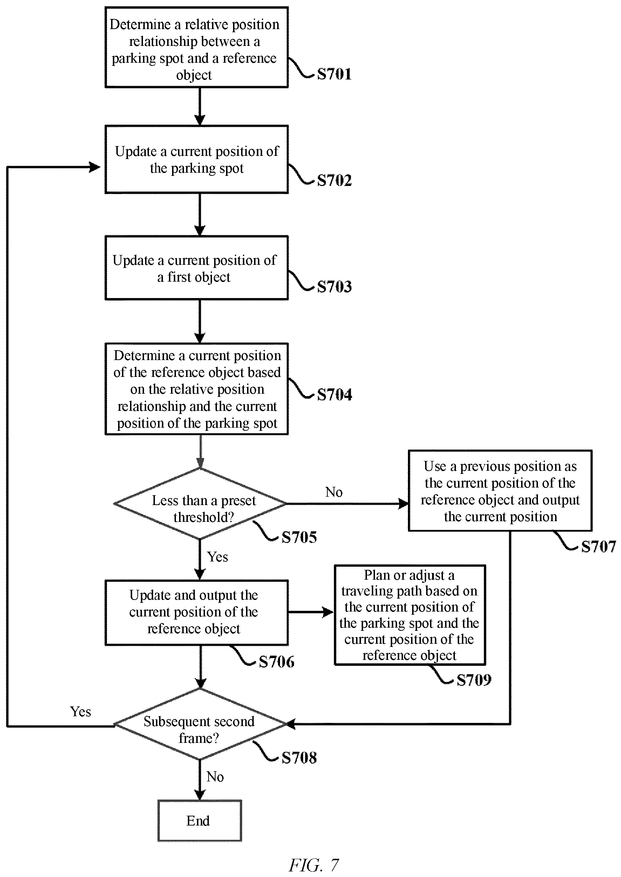

FIG. 7 is a flowchart of an automatic parking method. Exemplarily, the method described below is implemented by means of the vehicle control system shown in FIG. 6.

As shown in FIG. 7, in step S701, in response to a target tracking command of the autonomous driving domain controller 622, the image processing apparatus 630 determines a relative position relationship between a parking spot and at least one reference object (such as a parking spot, a column, a parking stopper, a parking lock, and a parking spot number printed on the ground) near the parking spot based on a first video frame. The manner of determining the relative position relationship has been described in detail above, and details are not described herein again.

The method then proceeds to step S702 in which the image processing apparatus 630 identifies the parking spot in a second video frame and updates a current position of the parking spot corresponding to a second video frame moment. The manner of identifying the parking spot and the manner of determining the position of the parking spot have been described in detail above, and details are not described herein again.

After step S703 is performed, the method procedure shown in FIG. 7 proceeds to step S704. In this step, the image processing apparatus 630 determines a position of the reference object by using the relative position relationship and the updated position of the parking spot. The manner of determining the position relationship of the reference object has been described in detail above, and details are not described herein again.

The method then proceeds to step S705 in which the image processing apparatus 630 determines whether a difference between the position of the reference object that is determined in step S704 and the position of the reference object at a moment corresponding to the first video frame is less than a preset threshold (when the position of the reference object in the first second video frame is determined in step S704), or determines whether a difference between the current position of the reference object that is determined in step S704 and the position of the reference object at a moment corresponding to a previous second video frame is less than a preset threshold (when the position of the reference object in a subsequent second video frame is determined in step S704).

In step S705, if the difference between the positions is less than the preset threshold, the method proceeds to step S706, and if the difference between the positions is not less than the preset threshold, the method proceeds to step S707.

In step S706, the current position of the reference object is updated with the position of the reference object that is determined in step S704, and the current position of the parking spot and the current position of the reference object are output to the autonomous driving domain controller 622.

After step S706 is performed, the method procedure shown in FIG. 7 may proceed to steps S708 and S709 that are performed concurrently.

In step S708, the image processing apparatus determines whether there is a subsequent second video frame, and if there is a subsequent second video frame, the method returns to step S702 to determine the position of the reference object at a moment corresponding to a next second video frame, and if there is no subsequent second video frame, the method procedure ends.

In step S709, the autonomous driving domain controller 622 plans or adjusts a traveling path based on the current position of the parking spot and the current position of the reference object.

Another branch step of step S705 is S707. In this step, the image processing apparatus 630 uses the position of the reference object that is previously determined in step S704 as the position of the reference object, and outputs the current position of the parking spot and the current position of the reference object to the autonomous driving domain controller 622. After step S707, the method procedure shown in FIG. 7 proceeds to step S708.

According to another aspect of the invention, a computer-readable storage medium having a computer program stored thereon is further provided, where when the program is executed by a processor, the steps included in the method as described above by means of FIG. 3 and FIG. 7 can be implemented.

The embodiments and examples proposed herein are provided to describe as adequately as possible embodiments according to the technology and specific applications thereof and thus enable those skilled in the art to implement and use the invention. However, those skilled in the art will know that the above descriptions and examples are provided only for description and illustration. The proposed description is not intended to cover all aspects of the invention or limit the invention to the disclosed precise forms. The invention is defined by the appended claims.

## Claims

1. A computer-implemented method for tracking an object within a video frame sequence for automatic parking, the video frame sequence comprising at least one first video frame and at least one second video frame that are captured by an onboard image obtaining apparatus (21), wherein the second video frame is later than the first video frame in terms of time, and the method comprises:
determining a relative position relationship between a first object and a second object (S303) based on the first video frame, wherein the relative position relationship remains unchanged within the video frame sequence; and
updating a position of the second object based on the relative position relationship and a position of the first object that is determined based on the second video frame,
wherein the position of the first object and the position of the second object are respectively represented by a position of at least one feature point of the first object and a position of at least one feature point of the second object in a plane parallel to the ground, and the relative position relationship is represented by a vector connecting the at least one feature point of the first object and the at least one feature point of the second object,
wherein the first video frame comprises a plurality of video frames, and the coordinates of the feature point of the first object and the feature point of the second object in the projection plane are a mean of the respective coordinates of the plurality of video frames.

2. The method according to claim 1, wherein the first object is a parking spot, and the second object is at least one of the following: a column, a parking stopper, a parking lock, and a parking spot number printed on the ground.

3. The method according to claim 1, wherein the step of determining a relative position relationship comprises:
identifying the first object and the second object within the first video frame;
projecting the identified first object and second object into a planar coordinate system parallel to the ground; and
determining coordinates of the feature point of the first object and the feature point of the second object within the projection plane to obtain the vector connecting the feature point of the first object and the feature point of the second object.

4. The method according to any of claims 1 to 3, wherein the step of updating a position of the second object comprises:
identifying the first object within the second video frame;
updating coordinates of the first object; and
updating coordinates of the second object based on the vector and the updated coordinates of the first object.

5. An image processing apparatus (20) for tracking an object within a video frame sequence adapted for automatic parking, the video frame sequence comprising at least one first video frame and at least one second video frame that are captured by an onboard image obtaining apparatus (21), wherein the second video frame is later than the first video frame in terms of time, and the image processing apparatus comprises:
a memory (210);
a processor (220); and
a computer program (230) stored on the memory (210) and executable on the processor,
wherein the computer program (230) is executed to cause the following steps to be performed:
determining a relative position relationship between a first object and a second object based on the first video frame, wherein the relative position relationship remains unchanged within the video frame sequence; and
updating a position of the second object based on the relative position relationship and a position of the first object that is determined based on the second video frame,
wherein the position of the first object and the position of the second object are respectively represented by a position of at least one feature point of the first object and a position of at least one feature point of the second object in a plane parallel to the ground, and the relative position relationship is represented by a vector connecting the at least one feature point of the first object and the at least one feature point of the second object,
wherein the first video frame comprises a plurality of video frames, and the coordinates of the feature point of the first object and the feature point of the second object in the projection plane are a mean of the respective coordinates of the plurality of video frames.

6. The image processing apparatus according to claim 5, wherein the first object is a parking spot, and the second object is at least one of the following: a column, a parking stopper, a parking lock, and a parking spot number printed on the ground.

7. The image processing apparatus according to claim 5 or 6, wherein the step of determining a relative position relationship comprises:
identifying the first object and the second object within the first video frame;
projecting the identified first object and second object into a planar coordinate system parallel to the ground; and
determining coordinates of the feature point of the first object and the feature point of the second object within the projection planar coordinate system to obtain the vector connecting the feature point of the first object and the feature point of the second object.

8. The image processing apparatus according to claim 5, wherein the step of updating a position of the second object comprises:
identifying the first object within the second video frame;
updating coordinates of the first object; and
updating coordinates of the second object based on the vector and the updated coordinates of the first object.

## Patentansprüche

1. Computer-implementiertes Verfahren zum Nachverfolgen eines Objekts in einer Videorahmensequenz zum automatischen Einparken, wobei die Videorahmensequenz mindestens einen ersten Videorahmen und mindesten einen zweiten Videorahmen umfasst, die durch eine bordinterne Bilderfassungsvorrichtung (21) aufgenommen werden, wobei der zweite Videorahmen zeitlich später als der erste Videorahmen ist und das Verfahren Folgendes umfasst:
Bestimmen einer relativen Positionsbeziehung zwischen einem ersten Objekt und einem zweiten Objekt (S303) auf der Grundlage des ersten Videorahmens, wobei die relative Positionsbeziehung in der Videorahmensequenz unverändert bleibt; und
Aktualisieren einer Position des zweiten Objekts auf der Grundlage der relativen Positionsbeziehung und einer Position des ersten Objekts, die auf der Grundlage des zweiten Videorahmens bestimmt wird,
wobei die Position des ersten Objekts und die Position des zweiten Objekts jeweils durch eine Position mindestens eines Merkmalspunktes des ersten Objekts und eine Position mindestens eines Merkmalspunktes des zweiten Objekts in einer Ebene parallel zum Boden dargestellt werden und die relative Positionsbeziehung durch einen Vektor dargestellt wird, der den mindestens einen Merkmalspunkt des ersten Objekts und den mindestens einen Merkmalspunkt des zweiten Objekts verbindet,
wobei der erste Videorahmen mehrere Videorahmen umfasst und die Koordinaten des Merkmalspunktes des ersten Objekts und des Merkmalspunktes des zweiten Objekts in der Projektionsebene ein Mittelwert der jeweiligen Koordinaten der mehreren Videorahmen sind.

2. Verfahren nach Anspruch 1, wobei das erste Objekt ein Parkplatz ist und das zweite Objekt mindestens eines der Folgenden ist: eine Säule, ein Parkanschlagelement, eine Parksperre und eine Parkplatznummer, die auf den Boden gedruckt ist.

3. Verfahren nach Anspruch 1, wobei der Schritt des Bestimmens einer relativen Positionsbeziehung Folgendes umfasst:
Identifizieren des ersten Objekts und des zweiten Objekts im ersten Videorahmen;
Projizieren des identifizierten ersten Objekts und zweiten Objekts in ein planares Koordinatensystem parallel zum Boden; und
Bestimmen der Koordinaten des Merkmalspunktes des ersten Objekts und des Merkmalspunktes des zweiten Objekts in der Projektionsebene, um den Vektor zu erhalten, der den Merkmalspunkt des ersten Objekts und den Merkmalspunkt des zweiten Objekts verbindet.

4. Verfahren nach einem der Ansprüche 1 bis 3, wobei der Schritt des Aktualisierens einer Position des zweiten Objekts Folgendes umfasst:
Identifizieren des ersten Objekts im zweiten Videorahmen;
Aktualisieren der Koordinaten des ersten Objekts; und
Aktualisieren der Koordinaten des zweiten Objekts auf der Grundlage des Vektors und der aktualisierten Koordinaten des ersten Objekts.

5. Bildverarbeitungsvorrichtung (20) zum Nachverfolgen eines Objekts in einer Videorahmensequenz, die zum automatischen Einparken ausgelegt ist, wobei die Videorahmensequenz mindestens einen ersten Videorahmen und mindesten einen zweiten Videorahmen umfasst, die durch eine bordinterne Bilderfassungsvorrichtung (21) aufgenommen werden, wobei der zweite Videorahmen zeitlich später als der erste Videorahmen ist und die Bildverarbeitungsvorrichtung Folgendes umfasst:
einen Speicher (210);
einen Prozessor (220); und
ein Computerprogramm (230), das auf dem Speicher (210) gespeichert ist und auf dem Prozessor ausführbar ist,
wobei das Computerprogramm (230) ausgeführt wird, um zu bewirken, dass die folgenden Schritte durchgeführt werden:
Bestimmen einer relativen Positionsbeziehung zwischen einem ersten Objekt und einem zweiten Objekt auf der Grundlage des ersten Videorahmens, wobei die relative Positionsbeziehung in der Videorahmensequenz unverändert bleibt; und
Aktualisieren einer Position des zweiten Objekts auf der Grundlage der relativen Positionsbeziehung und einer Position des ersten Objekts, die auf der Grundlage des zweiten Videorahmens bestimmt wird,
wobei die Position des ersten Objekts und die Position des zweiten Objekts jeweils durch eine Position mindestens eines Merkmalspunktes des ersten Objekts und eine Position mindestens eines Merkmalspunktes des zweiten Objekts in einer Ebene parallel zum Boden dargestellt werden und die relative Positionsbeziehung durch einen Vektor dargestellt wird, der den mindestens einen Merkmalspunkt des ersten Objekts und den mindestens einen Merkmalspunkt des zweiten Objekts verbindet,
wobei der erste Videorahmen mehrere Videorahmen umfasst und die Koordinaten des Merkmalspunktes des ersten Objekts und des Merkmalspunktes des zweiten Objekts in der Projektionsebene ein Mittelwert der jeweiligen Koordinaten der mehreren Videorahmen sind.

6. Bildverarbeitungsvorrichtung nach Anspruch 5, wobei das erste Objekt ein Parkplatz ist und das zweite Objekt mindestens eines der Folgenden ist: eine Säule, ein Parkanschlagelement, eine Parksperre und eine Parkplatznummer, die auf den Boden gedruckt ist.

7. Bildverarbeitungsvorrichtung nach Anspruch 5 oder 6, wobei der Schritt des Bestimmens einer relativen Positionsbeziehung Folgendes umfasst:
Identifizieren des ersten Objekts und des zweiten Objekts im ersten Videorahmen;
Projizieren des identifizierten ersten Objekts und zweiten Objekts in ein planares Koordinatensystem parallel zum Boden; und
Bestimmen der Koordinaten des Merkmalspunktes des ersten Objekts und des Merkmalspunktes des zweiten Objekts im Projektions-Planarkoordinatensystem, um den Vektor zu erhalten, der den Merkmalspunkt des ersten Objekts und den Merkmalspunkt des zweiten Objekts verbindet.

8. Bildverarbeitungsvorrichtung nach Anspruch 5, wobei der Schritt des Aktualisierens einer Position des zweiten Objekts Folgendes umfasst:
Identifizieren des ersten Objekts im zweiten Videorahmen;
Aktualisieren der Koordinaten des ersten Objekts; und
Aktualisieren der Koordinaten des zweiten Objekts auf der Grundlage des Vektors und der aktualisierten Koordinaten des ersten Objekts.

## Revendications

1. Procédé mis en œuvre par ordinateur pour suivre un objet à l'intérieur d'une séquence d'images vidéo pour un stationnement automatique, cette séquence d'images vidéo comprenant au moins une première image vidéo et au moins une deuxième image vidéo qui sont capturées par un appareil d'obtention d'images embarqué (21), la deuxième image vidéo étant ultérieure à la première image vidéo en termes de temps, et ce procédé comprenant :
la détermination d'un rapport de positions relatives entre un premier objet et un deuxième objet (S303) en se basant sur la première image vidéo, ce rapport de positions relatives restant inchangé à l'intérieur de la séquence d'images vidéo ; et
la mise à jour d'une position du deuxième objet en se basant sur le rapport de positions relatives et sur une position du premier objet qui est déterminée en se basant sur la deuxième image vidéo,
la position du premier objet et la position de deuxième objet étant représentées respectivement par une position d'au moins un point caractéristique du premier objet et par une position d'au moins un point caractéristique du deuxième objet dans un plan parallèle au sol, et le rapport de positions relatives étant représenté par un vecteur reliant l'au moins un point caractéristique du premier objet et l'au moins un point caractéristique du deuxième objet,
la première image vidéo comprenant une pluralité d'images vidéo, et les coordonnées du point caractéristique du premier objet et du point caractéristique du deuxième objet dans le plan de projection étant une moyenne des coordonnées respectives de la pluralité d'images vidéo.

2. Procédé selon la revendication 1, dans lequel le premier objet est une place de stationnement, et le deuxième objet est au moins un des objets suivants : une colonne, une butée de stationnement, un bloqueur de stationnement et un numéro de place de stationnement imprimé sur le sol.

3. Procédé selon la revendication 1, dans lequel l'étape de détermination d'un rapport de positions relatives comprend :
l'identification du premier objet et du deuxième objet à l'intérieur de la première image vidéo ;
la projection du premier objet et du deuxième objet identifiés dans un système de coordonnées planes parallèle au sol ; et
la détermination des coordonnées du point caractéristique du premier objet et du point caractéristique du deuxième objet à l'intérieur du plan de projection afin d'obtenir le vecteur reliant le point caractéristique du premier objet et le point caractéristique du deuxième objet.

4. Procédé selon l'une quelconque des revendications 1 à 3, dans lequel l'étape de mise à jour d'une position du deuxième objet comprend :
l'identification du premier objet à l'intérieur de la deuxième image vidéo ;
la mise à jour des coordonnées du premier objet ; et
la mise à jour des coordonnées du deuxième objet en se basant sur le vecteur et sur les coordonnées mises à jour du premier objet.

5. Appareil de traitement d'images (20) pour suivre un objet à l'intérieur d'une séquence d'images vidéo adaptée à un stationnement automatique, cette séquence d'images vidéo comprenant au moins une première image vidéo et au moins une deuxième image vidéo qui sont capturées par un appareil d'obtention d'images embarqué (21), la deuxième image vidéo étant ultérieure à la première image vidéo en termes de temps, et cet appareil de traitement d'images comprenant :
une mémoire (210) ;
un processeur (220) ; et
un programme informatique (230) stocké dans la mémoire (210) et exécutable sur le processeur,
ce programme informatique (230) étant exécuté pour entraîner l'exécution des étapes suivantes :
la détermination d'un rapport de positions relatives entre un premier objet et un deuxième objet en se basant sur la première image vidéo, ce rapport de positions relatives restant inchangé à l'intérieur de la séquence d'images vidéo ; et
la mise à jour d'une position du deuxième objet en se basant sur le rapport de positions relatives et sur une position du premier objet qui est déterminée en se basant sur la deuxième image vidéo,
la position du premier objet et la position de deuxième objet étant représentées respectivement par une position d'au moins un point caractéristique du premier objet et par une position d'au moins un point caractéristique du deuxième objet dans un plan parallèle au sol, et le rapport de positions relatives étant représenté par un vecteur reliant l'au moins un point caractéristique du premier objet et l'au moins un point caractéristique du deuxième objet,
la première image vidéo comprenant une pluralité d'images vidéo, et les coordonnées du point caractéristique du premier objet et du point caractéristique du deuxième objet dans le plan de projection étant une moyenne des coordonnées respectives de la pluralité d'images vidéo.

6. Appareil de traitement d'images selon la revendication 5, dans lequel le premier objet est une place de stationnement, et le deuxième objet est au moins un des objets suivants : une colonne, une butée de stationnement, un bloqueur de stationnement et un numéro de place de stationnement imprimé sur le sol.

7. Appareil de traitement d'images selon la revendication 5 ou 6, dans lequel l'étape de détermination d'un rapport de positions relatives comprend :
l'identification du premier objet et du deuxième objet à l'intérieur de la première image vidéo ;
la projection du premier objet et du deuxième objet identifiés dans un système de coordonnées planes parallèle au sol ; et
la détermination des coordonnées du point caractéristique du premier objet et du point caractéristique du deuxième objet à l'intérieur du système de coordonnées planes de projection afin d'obtenir le vecteur reliant le point caractéristique du premier objet et le point caractéristique du deuxième objet.

8. Appareil de traitement d'images selon la revendication 5, dans lequel l'étape de mise à jour d'une position du deuxième objet comprend :
l'identification du premier objet à l'intérieur de la deuxième image vidéo ;
la mise à jour des coordonnées du premier objet ; et
la mise à jour des coordonnées du deuxième objet en se basant sur le vecteur et sur les coordonnées mises à jour du premier objet.
